# FASCICULE DE BREVET EUROPEEN

(11) **EP 3 606 734 B1**
(45) Date de publication et mention de la délivrance du brevet: **25.01.2023**
(21) Numéro de dépôt: 18720312.0
(22) Date de dépôt: 30.03.2018
(51) Int. Cl.: B29C 70/24

(54) **PROCÉDÉ DE RÉALISATION DE PIÈCES EN MATÉRIAU COMPOSITE A PARTIR DE PRÉFORMES AIGUILLETÉES EN PRÉSENCE D'AGENT LUBRIFIANT**
VERFAHREN ZUR HERSTELLUNG VON VERBUNDSTOFFTEILEN AUS IN GEGENWART EINES SCHMIERMITTELS GENADELTEN VORFORMEN
METHOD FOR PRODUCING COMPOSITE MATERIAL PARTS FROM PREFORMS THAT ARE NEEDLED IN THE PRESENCE OF A LUBRICANT

(30) Priorité: 03.04.2017 FR 1770332
(43) Date de publication de la demande: 12.02.2020
(73) Titulaire: Coriolis Group, 56530 Quéven (FR)
(72) Inventeur: HAMLYN, Alexander, 56270 Ploemeur (FR); JOB, Sophie, 56690 Nostang (FR)
(86) Numéro de dépôt international: PCT/FR2018/000087
(87) Numéro de publication internationale: WO 2018/185384

(56) Documents cités:
- WO-A1-98/53978
- WO-A2-2009/064594
- GB-A- 2 073 658
- US-A1- 2002 123 287

## Description

La présente invention concerne un procédé de réalisation de pièces en matériau composite à matrice organique, appelée également matériau composite à matrice polymère, comprenant des fibres continues unidirectionnelles et une matrice polymère.

Il est connu des procédés de réalisation de pièces en matériau composite à matrice polymère comprenant une étape de réalisation d'une préforme sèche initiale, et une étape d'imprégnation de la préforme sèche avec un polymère d'imprégnation, par exemple par injection et/ou infusion, pour former une pièce en matériau composite, le polymère d'imprégnation constituant la matrice polymère de la pièce en matériau composite.

Les préformes sèches sont classiquement réalisées manuellement à partir de tissus formés par tissage de fibres sèches continues unidirectionnelles, ou à partir de tissus multiaxiaux ou tissus NCF (Non Crimp Fabric) comprenant plusieurs plis superposés de fibres unidirectionnelles continues maintenus ensemble par couture. Ces préformes présentent un coût de fabrication élevé, et les taux de chute lors de la réalisation de pièces à partir de tels tissus préfabriqués s'avèrent importants.

Afin d'automatiser les opérations et limiter le taux de chute, il a été proposé de réaliser des préformes sèches par drapage automatique de fibres unidirectionnelles continues, les préformes résultantes comprenant plusieurs plis superposés de fibres unidirectionnelles continues. Les fibres peuvent par exemple être appliquées au contact, au moyen d'un rouleau, par un procédé de placement de fibres, chaque pli étant formé par drapage sur un moule d'une ou plusieurs bandes jointives, chacune formée d'une ou plusieurs fibres plates, de type ruban, telles que des fibres de carbone constituées d'une multitude de fils ou filaments de carbone. Les préformes sèches comprennent une faible quantité de liant, généralement inférieure à 5 %, permettant de maintenir la cohésion de la préforme. Toutefois, ce type de préforme obtenue par drapage de plis superposés peut présenter une perméabilité et une cohésion entre fibres insuffisantes pour permettre une imprégnation rapide et satisfaisante, notamment dans le cas d'une imprégnation par injection RTM (Resin Transfert Molding) à haute pression et haute température.

Par ailleurs, il a été proposé dans la demande de brevet FR16 70556, déposée par la Demanderesse le 27 septembre 2016, et intitulée « Procédé de réalisation de pièces en matériau composite par imprégnation d'une préforme particulière », un procédé de réalisation de pièces en matériau composite comprenant une étape d'application de filaments non tissés sur une première face principale de la préforme sèche et une étape d'aiguilletage desdits filaments au moyen d'un dispositif d'aiguilletage comprenant une pluralité d'aiguilles, chacune munie d'au moins une encoche, de sorte que des filaments soient entraînés par les aiguilles et disposés dans une direction sensiblement perpendiculaire aux fibres continues de la préforme sèche.

Ce procédé permet de proposer de nouvelles préformes sèches présentant une excellente cohésion pour leur traitement ultérieur, et une excellente perméabilité. Suivant le type de fibres utilisées, quelques ruptures de fibres peuvent toutefois apparaître lors de l'aiguilletage, générant des fibrilles nocives pour les opérateurs et les équipements.

En outre la préforme peut avoir tendance à s'échauffer lors de l'aiguilletage. Suivant le type de liant utilisé, cet échauffement peut engendrer une liquéfaction du liant susceptible d'encrasser les aiguilles, et donc de réduire l'efficacité du transfert des filaments.

US 2002/123287 décrit un procédé de fabrication de pièces en matériau composite selon le préambule de la revendication 1.

WO2009/064594 décrit un procédé de réalisation d'une préforme tissée comprenant, au niveau de portions d'extrémité, des renforts additionnels dans l'épaisseur obtenus par ajout de fibres de renforcement dans l'épaisseur. Cet ajout de fibres dans l'épaisseur est réalisé par touffetage ou couture. Pendant ce touffetage ou couture, une quantité d'agent de lubrification est ajoutée.

GB 2073658 décrit un produit multi-plis comprenant un mat de fibres de verre longues imprégné avec une feuille thermoplastique à l'état fondu. Si le mat de fibres de verre longues est non tissé, les fibres peuvent être tenues ensemble par un liant ou par aiguilletage. Une feuille thermoplastique est ensuite appliquée sur chaque face du produit multi-plis, ladite feuille pouvant comprendre des fibres de verre courtes. Les fibres de verre courtes sont alors ajoutées dans l'extrudeuse à vis avec la résine. Les fibres de verre utilisées peuvent être recouvertes d'une composition d'ensimage comprenant un lubrifiant pour éviter la destruction des fibres par abrasion des filaments constituant la fibre, les uns contre les autres et contre les équipements de manipulation des fibres.

WO98/53978 décrit un procédé de réalisation d'un mat comprenant la réalisation d'une préforme à partir de fibres de verre continues, l'application de fibres de verre discontinues non tissées sur la préforme, les fibres de verre utilisées étant également recouvertes d'une composition d'ensimage comprenant un agent lubrifiant, et une étape d'aiguilletage ensemble des fibres de verres continues de la préforme et des fibres de verre discontinus pour former le mat. Le but de la présente invention est de proposer un procédé de fabrication de pièces en matériau composite visant à pallier au moins l'un des inconvénients précités.

A cet effet, la présente invention a pour objet un procédé de réalisation de pièces en matériau composite à matrice polymère, selon la revendication 1.

Les aiguilles sont entraînées dans un mouvement de va-et-vient par un système d'entrainement du dispositif d'aiguilletage, pour traverser la préforme, de préférence de part en part. Lors du mouvement des aiguilles en direction de la préforme, au moins une partie de ces filaments se positionnent dans les encoches des aiguilles et sont entraînés par les aiguilles à travers la préforme.

Ces filaments aiguilletés positionnés dans la direction Z, dans l'épaisseur de la préforme, stabilisent la préforme et permettent d'augmenter la cohésion de la préforme pour la ou les étapes ultérieures de traitement de la préforme, notamment d'éviter un délaminage ou un déplacement non souhaité de fibres de la préforme lors d'une étape d'imprégnation ou une étape de formage ultérieure.

Selon l'invention, l'étape d'aiguilletage est effectuée en présence d'un agent lubrifiant, appelé également agent de lubrification, permettant de limiter les frottements entre les aiguilles et les fibres de la préforme, et ainsi de réduire les ruptures de fibres de la préforme dues aux frottements. Les aiguilles pénètrent mieux à travers la préforme et le transfert de filaments à travers la préforme est ainsi amélioré.

Par ailleurs, en cas de rupture de fibres, l'agent lubrifiant limite, voir supprime, la dispersion des fibrilles générées, l'agent lubrifiant piégeant les fibrilles dans la préforme, par simple capillarité et/ou en raison des fibrilles qui sont alourdies par l'agent lubrifiant.

Un important taux de transfert de filament peut ainsi être obtenu avec une densité d'aiguilletage réduite, ce qui permet de réduire le temps de réalisation de l'étape d'aiguilletage et ainsi d'augmenter la cadence de production des préformes aiguilletées.

Lors de l'aiguilletage, les encoches des aiguilles sont remplies par les filaments de sorte que les fibres continues ne sont pas ou peu entraînées ou endommagées par les aiguilles. Dans le cas de préformes présentant des fibres continues avec une orientation principale, les aiguilles sont disposées de sorte que leurs encoches ne puissent emporter les fibres continues de la préforme, les encoches étant de préférence disposées à 90° de l'orientation principale des fibres.

Les fibres continues, de préférence appliquées par placement de fibres, sont de préférence des fibres continues unidirectionnelles, par exemple des fibres de carbone, des fibres de verre, des fibres synthétiques telles que des fibres d'aramide, des fibres de polyéthylène, et/ou des fibres naturelles, telles que par exemple des fibres de lin.

Le procédé selon l'invention peut notamment être utilisé pour des préformes sèches telles que décrites dans le document brevet précité, le procédé comprenant alors une étape d'imprégnation de la préforme après aiguilletage, et/ou pour des préformes munies du ou des polymères constituant la matrice finale de la pièce tel que décrit dans la demande déposée par la Demanderesse, le même jour que la présente demande, et intitulée « Procédé de réalisation de pièces en matériau composites à partir de préformes aiguilletées ».

Le procédé selon l'invention peut avantageusement être utilisé pour la réalisation de pièce en matériau composite, notamment dans le domaine de l'automobile ou l'aéronautique.

Selon l'invention, l'agent lubrifiant comprend de l'eau, éventuellement de l'eau déminéralisée ou distillée, ou de l'eau savonneuse.

Selon l'invention, la préforme est humidifiée avant l'étape d'aiguilletage, la préforme comprend au moins 2% en poids d'eau, de préférence au moins 5% en poids d'eau, de préférence de 5 à 40% en poids d'eau, mieux encore de 10% à 40% en poids d'eau. Cet agent lubrifiant présent à au moins 2% en poids permet d'éviter de manière efficace la dispersion de fibrilles dans l'environnement ambiant.

Selon un mode de réalisation, l'agent lubrifiant est appliqué sur la préforme avant l'opération d'aiguilletage, par exemple par pulvérisation.

L'agent lubrifiant, formé par de l'eau, peut être appliqué sur la préforme juste après la réalisation de la préforme, par exemple par drapage, et avant aiguilletage, par exemple par pulvérisation sur une face ou les deux faces de la préforme, cette application pouvant être effectuée en continu lors du déplacement de la préforme vers la machine d'aiguilletage.

Selon une variante, l'agent lubrifiant est appliqué lors du drapage de la préforme, notamment lorsque la préforme présente une épaisseur importante, le lubrifiant étant appliqué par exemple après drapage d'un ensemble de plis, par exemple après chaque ensemble de 10 plis.

Selon un mode de réalisation, l'agent lubrifiant est appliqué sur les filaments non tissés, de préférence avant l'opération d'aiguilletage, par exemple par pulvérisation. L'application du lubrifiant sur les filaments peut être effectuée en alternative à l'application de l'agent lubrifiant sur la préforme, ou en combinaison avec cette dernière.

Selon un autre mode de réalisation, l'agent lubrifiant est appliqué lors de l'aiguilletage, l'agent lubrifiant étant par exemple appliqué par le dispositif d'aiguilletage.

Selon un mode de réalisation, le procédé comprend une étape de séchage de la préforme après aiguilletage, par exemple par séchage mécanique par pressage combiné éventuellement à une aspiration, et/ou par passage dans une étuve, et/ou par séchage par infrarouge, par radiofréquences ou par micro-ondes. A titre d'exemple, notamment lorsque l'agent lubrifiant comprend de l'eau, le séchage comprend un pressage de la préforme entre deux rouleaux combinés à une aspiration pour extraire l'excédent d'eau, puis par passage de la préforme dans une étuve.

Selon un mode de réalisation, le procédé comprend la réalisation d'une préforme initiale comprenant plusieurs plis superposés, lesdits plis étant formés à partir de fibres continues de préférence unidirectionnelles munies d'un premier polymère.

En l'absence d'agent lubrifiant, le frottement des aiguilles avec les fibres engendre un échauffement de la préforme entrainant un ramollissement, voire une liquéfaction du premier polymère qui génère un encrassement des aiguilles et qui freine un transfert efficace des filaments. La présence de l'agent lubrifiant selon l'invention permet de réduire l'échauffement de la préforme lors de son aiguilletage et ainsi de garantir un transfert efficace des filaments à travers la préforme lors de l'aiguilletage.

Les fibres dites sèches peuvent être munies d'une faible quantité de premier polymère, appelé liant, suffisante pour assurer une liaison des différents plis de la préforme, la préforme dite sèche étant par la suite soumise à une opération d'ajout d'un polymère dit d'imprégnation pour constituer la matrice de la pièce composite finale.

Les fibres peuvent être munies d'une quantité de premier polymère suffisante pour former la matrice finale de la pièce composite, le premier polymère pouvant être un polymère thermodurcissable ou thermoplastique, par exemple sous forme de poudre, d'un ou plusieurs voiles et/ou de fils.

Selon une variante de réalisation, les fibres continues sont munies d'un deuxième polymère, formant avec le premier polymère la matrice ou constituant un liant, le drapage étant réalisé en appliquant un chauffage pour chauffer le deuxième polymère afin de le rendre collant, le premier polymère restant peu ou pas collant.

Selon d'autres modes de réalisation, l'agent lubrifiant est présent dans les fibres et/ou le(s) polymère(s) utilisés pour la réalisation de la préforme. Selon un mode de réalisation, les fibres et/ou le(s) polymères constituant la préforme sont saturés en eau, cette eau présente dans les fibres et/ou le(s) polymère(s) au moment de la réalisation de la préforme constituant l'agent lubrifiant.

De préférence, le procédé comprend la réalisation d'une préforme non tissée. Selon un mode de réalisation, le procédé comprend la réalisation d'une préforme initiale dite sèche comprenant plusieurs plis superposés, lesdits plis étant formés à partir de fibres sèches continues, de préférence, unidirectionnelles, munies d'un liant comprenant le premier polymère, ledit procédé comprenant après l'étape d'aiguilletage, une étape d'imprégnation de la préforme sèche avec un polymère d'imprégnation, appelé quatrième polymère, par exemple par injection et/ou infusion, pour former une pièce en matériau composite.

Ladite étape d'imprégnation est de préférence effectuée à une température supérieure à la température de transition vitreuse, et de préférence inférieure à la température de fusion du premier polymère formant le liant. Les préformes sèches sont obtenues par application de fibres sèches munies d'un liant et/ou par application de fibres sèches sans liant, et application de liant, par exemple par pulvérisation d'un liant liquide et/ou projection d'un liant sous forme de poudre, sur la surface d'application et/ou sur les fibres sèches préalablement drapées. La préforme sèche comprend moins de 10% en poids de liant, de préférence moins de 5% en poids de liant.

Dans le cas d'une telle préforme sèche, les filaments aiguilletés positionnés dans la direction Z, dans l'épaisseur de la préforme, stabilisent la préforme sèche et permettent d'augmenter la cohésion de la préforme sèche pour l'étape ultérieure d'imprégnation, et ainsi d'éviter un délaminage de la préforme lors de l'imprégnation, notamment dans le cas d'injection de polymère d'imprégnation. Par ailleurs, les perforations créées par les aiguilles et les filaments aiguilletés positionnés en Z augmentent la perméabilité en Z de la préforme sèche, dans l'épaisseur de la préforme.

L'imprégnation est ainsi facilitée et peut être effectuée à des cadences élevées, sans zones sèches, et sans détérioration de la préforme. A l'issue de l'étape d'imprégnation, la pièce en matériau composite comprend de préférence au moins 30% en poids de polymère d'imprégnation et/ou de préférence au moins 35% en volume de polymère d'imprégnation, le polymère d'imprégnation constituant la matrice de la pièce en matériau composite. L'étape d'imprégnation peut consister en une étape d'injection de la préforme sèche placée dans un moule d'injection.

De préférence, la pièce en matériau composite selon l'invention comprend au moins 40% en volume de fibres continues unidirectionnelles, de préférence au moins 50% en volume, mieux encore au moins 55% en volume de fibres continues unidirectionnelles.

L'étape d'imprégnation peut par exemple être réalisée selon un procédé d'imprégnation par voie humide, un procédé d'infusion sous vide, un procédé LCM, un procédé RTM, HP-RTM, Gap-RTM ou VARTM. Selon un mode de réalisation, l'étape d'imprégnation consiste en une étape d'injection de la préforme sèche placée dans un moule d'injection, l'injection étant réalisée à une pression d'au moins 10 bars, par exemple de l'ordre de 50 bars.

Selon un autre mode de réalisation, les fibres sont munies d'une quantité de premier polymère suffisante pour former la matrice finale. Lors du drapage le premier polymère est chauffé pour assurer une liaison des différents plis. Après aiguilletage, la préforme est soumise à une opération de chauffage éventuellement combinée à une opération de formage pour chauffer l'ensemble du premier polymère et créer la matrice.

Selon un autre mode de réalisation, les fibres sont munies d'un deuxième polymère, formant avec le premier polymère la matrice ou constituant un liant.

Dans le cas d'un deuxième polymère formant la matrice, la matrice est formée d'une partie majoritaire de premier polymère, le deuxième polymère formant par exemple jusqu'à 20% en poids de la matrice. Le deuxième polymère peut se présenter sous une forme de poudre, de voile(s) et/ou de fils, et être présent avec le premier polymère sur les fibres avant la réalisation de la préforme.

Dans le cas d'un deuxième polymère constituant un liant, les préformes sont obtenues par application de fibres munies du premier polymère et du liant et/ou par application de fibres munies uniquement du premier polymère, et application de liant, par exemple par pulvérisation d'un liant liquide et/ou projection d'un liant sous forme de poudre, sur la surface d'application et/ou sur les fibres préalablement drapées. La préforme comprend moins de 10% en poids de liant, de préférence moins de 5% en poids de liant.

Selon un mode de réalisation, les filaments non tissés appliqués lors de l'étape d'application sont formés à partir d'au moins un troisième polymère, ladite étape d'imprégnation étant alors effectuée à une température inférieure à la température de fusion, et de préférence supérieure à la température de transition vitreuse dudit troisième polymère, de sorte que les filaments assurent un bon maintien des fibres de la préforme lors de l'étape d'imprégnation, notamment sa tenue mécanique au délaminage.

Le premier polymère constituant un liant, l'éventuel deuxième polymère et l'éventuel troisième polymère peuvent être différents ou identiques ou de même famille.

Selon un mode de réalisation, le troisième polymère formant le liant et/ou le deuxième polymère formant les filaments est un polymère thermoplastique, de préférence choisi dans le groupe constitué par les polyamides, notamment les polyamides aromatiques (aramides), polyesters tels que le polyéthylène téréphtalate, polyéthersulfones, polyétheréthercétones, polysulfures de phénylène, polyuréthanes, époxydes, polyoléfines, acide polylactique, polyacryliques, et leurs mélanges.

Dans le cas de polymère thermodurcissable, le premier polymère constituant un liant, l'éventuel deuxième polymère et le troisième polymère sont par exemple choisis dans le groupe constitué par les époxydes, polyesters, vinylesters, phénoliques, polyimides, bismaléimides, et leurs mélanges.

Le quatrième polymère d'imprégnation est différent du premier polymère constituant un liant, l'éventuel deuxième polymère et l'éventuel troisième polymère, et est de préférence choisi dans les groupes de polymères précités.

Le premier polymère, lorsqu'il forme la matrice, est différent des éventuels deuxième polymère et troisième polymère lorsqu'ils sont présents, et est de préférence choisi dans les groupes de polymères précités.

Selon d'autres modes de réalisation, les filaments non tissés appliqués sur la préforme sont des fibres minérales, notamment des fibres céramiques telles que des fibres de verre, des fibres de carbone, ou des fibres métalliques, les filaments permettant de renforcer la préforme ainsi que la pièce finale dans l'épaisseur.

Selon un mode de réalisation, la préforme est obtenue par un procédé de placement de fibres, connu en soi. Selon un mode de réalisation, la réalisation de la préforme comprend la réalisation de plis superposés, par application au contact, au moyen d'un rouleau d'application, de fibres continues, de préférence unidirectionnelles sur un outillage de drapage, chaque pli étant réalisé par application d'une ou plusieurs bandes selon une orientation sur l'outillage de drapage ou sur des bandes du pli précédent, chaque bande étant formée d'une ou plusieurs fibres continues.

Le placement de fibres est avantageusement automatisé au moyen d'une tête de placement de fibres, connue en soi, comportant un rouleau de compactage destiné à venir en contact contre l'outillage pour appliquer une bande formée d'une ou plusieurs fibres plates continues, et un système de guidage pour guider la ou les fibres sur ledit rouleau, par déplacement relatif de la tête d'application par rapport à la surface de drapage selon différentes trajectoires. La préforme comprend par exemple de 2 à 100 plis superposés.

Lesdites fibres continues se présentent de préférence sous la forme de fibres continues unidirectionnelles plates, classiquement appelées mèches, comprenant une multitude de filaments. Les fibres présentent par exemple des largeurs d'un huitième de pouce, un quart de pouce ou un demi-pouce (1/8", 1/4" ou 1/2"). Dans la présente, le terme «fibres» désigne également des fibres de plus grande largeur, supérieure à 1/2 pouce, classiquement appelée bande dans la technologie du placement.

En variante, les fibres peuvent être fixées sur le moule, par exemple mécaniquement ou par collage, uniquement en début et en fin de trajectoire, le rouleau étant de préférence en contact en début et en fin de trajectoire, et éventuellement à distance de la surface sur le reste de la trajectoire.

Selon d'autres modes de réalisation, l'aiguilletage selon l'invention est utilisé en remplacement de l'opération de couture effectuée lors de la fabrication d'un tissu multiaxial NCF, la préforme comprend alors plusieurs plis superposés, sans liant, l'aiguilletage des filaments appliqués sur la préforme est réalisé en maintenant mécaniquement les fibres des plis de la préforme, par exemple par des systèmes de picots autour desquels les fibres passent. La préforme aiguilletée résultante est alors soumise à une opération d'imprégnation pour former la pièce en matériau composites.

Selon un mode de réalisation, le procédé comprend une étape de thermoformage de la préforme renforcée obtenue après l'étape d'aiguilletage de préférence entre l'outillage de formage mâle et l'outillage de formage femelle d'une presse pour obtenir une préforme tridimensionnelle.

Dans le cas de filaments en un troisième polymère, le thermoformage est réalisé à une température de thermoformage inférieure à la température de fusion du troisième polymère, et de préférence supérieure à la température de transition vitreuse du troisième polymère,

Dans le cas d'une préforme sèche avec un liant formé du premier polymère, la préforme tridimensionnelle obtenue après le thermoformage est soumise à l'étape d'imprégnation.

Le formage est de préférence réalisé à une température de formage inférieure à la température de fusion du premier polymère formant la matrice, du premier polymère formant le liant ou du deuxième polymère, et de préférence supérieure à la température de transition vitreuse dudit premier ou deuxième polymère. Le formage est réalisé à chaud, la préforme initiale étant chauffée à une température de formage avant et/ou pendant le formage afin d'augmenter la formabilité de la préforme. La préforme initiale peut être préchauffée avant le formage par passage dans un four ou tunnel et/ou la préforme peut-être chauffée lors du formage, par exemple par chauffage de l'outillage de formage mâle et/ou l'outillage de formage femelle. De préférence, la préforme est uniquement préchauffée par passage dans four ou tunnel, les outillages de la presse n'étant pas chauffés, simplifiant ainsi les outillages de presse. En variante le formage est réalisé au moyen d'une bâche à vide, après positionnement de la préforme sur un outillage de formage.

En l'absence d'aiguilletage, la déformation de la préforme lors du formage s'effectue fibre par fibre. L'opération d'aiguilletage de la préforme selon l'invention préalablement à l'opération de formage permet d'obtenir une déformation homogène de la préforme, du fait du glissement des filaments aiguilletés.

Par ailleurs, les filaments du feutre présents sur chaque face principale de la préforme permettent un glissement de la préforme dans la presse sans adhérence. Les filaments extérieurs stabilisent les surfaces extérieures de la préforme en limitant, voire supprimant, les déformations locales de la préforme et assurent ainsi une déformation homogène des fibres de la préforme. Le procédé selon l'invention permet ainsi de favoriser les mécanismes de glissement entre les outillages de formage et la préforme, et ainsi de limiter, voire supprimer, les défauts de fibres des plis externes des préformes résultant des frictions entre la préforme et les outillages de formage dans les procédés de formage antérieurs.

La préforme initiale peut être bidimensionnelle, obtenue par drapage sur la surface plane d'un outillage, ou tridimensionnelle, le formage pouvant alors être effectué pour obtenir des pièces tridimensionnelles de forme complexe ne pouvant être obtenues par drapage, notamment par placement de fibres.

La densité d'aiguilletage est définie notamment en fonction de la perméabilité et de la stabilisation recherchées, et du type d'aiguille utilisée. Selon un mode de réalisation, la densité d'aiguilletage lors de l'étape d'aiguilletage est comprise entre 10 et 350 coups/cm². Dans le cas d'un dispositif d'aiguilletage muni d'aiguilles à fourche, la densité d'aiguilletage est de préférence de 150 à 350 coups/cm², mieux encore de 200 à 300 coups/cm². Dans le cas d'un dispositif d'aiguilletage muni d'aiguilles à barbes, comprenant chacune plusieurs encoches, la densité d'aiguilletage est de préférence de 10 à 100 coups/cm², mieux encore de 40 à 60 coups/cm².

La partie travaillante des aiguilles a de préférence un diamètre compris entre 0,30 et 0,60 mm, de préférence entre 0,40 et 0,50 mm (jauges de 38 à 42).

La largeur et/ou la profondeur des encoches, de préférence la largeur et la profondeur des encoches, sont comprises entre 0,03 et 0,1 mm, de préférence entre 0,04 et 0,06 mm.

La longueur des filaments est définie en fonction de l'épaisseur de la préforme, de préférence de sorte que les filaments aiguilletés traversent la préforme. Par ailleurs, les filaments aiguilletés doivent de préférence être suffisamment longs pour rester entremêlés sur la première face de la préforme, et ainsi assurer une meilleure stabilité de la préforme.

Selon un mode de réalisation, les filaments appliqués sur la préforme ont une longueur comprise entre 10 et 100 mm, de préférence entre 40 et 60 mm, et un diamètre compris entre 5 et 50 µm, de préférence 10 à 35 µm.

Selon un mode de réalisation, l'aiguilletage est réalisé de sorte que des filaments transférés par les aiguilles dépassent de la deuxième face principale de la préforme qui est opposée à la première face principale sur laquelle les filaments ont été appliqués, sur une longueur comprise entre 1 et 10 mm, de préférence de 2 à 6 mm, certain de ces filaments pouvant former des boucles dépassant de la deuxième face de la préforme.

Selon un autre mode de réalisation, notamment dans le cas d'une préforme d'épaisseur importante, le procédé selon l'invention comprend une étape d'application de filaments non tissés sur la deuxième face principale de la préforme sèche, et une étape d'aiguilletage desdits filaments présents sur ladite deuxième face principale. De préférence, l'aiguilletage des filaments présents sur ladite deuxième face principale et l'aiguilletage des filaments présents sur ladite première face principale sont réalisés simultanément.

Selon un mode de réalisation, l'aiguilletage est réalisé au moyen d'aiguilles à fourche, de préférence avec une profondeur de pénétration d'aiguille comprise entre 1 et 10 mm, de préférence entre 2 et 6 mm. L'utilisation d'aiguilles à fourche permet d'obtenir un aiguilletage efficace des filaments, sans détérioration des fibres de la préforme.

Selon un mode de réalisation, ladite étape d'application de filaments comprend l'application d'un voile ou feutre non tissé formé desdits filaments. Les feutres utilisés peuvent être isotropes, avec des filaments orientés de manière aléatoire, ou des feutres orientés avec des filaments présentant une orientation préférentielle. Dans le cas de feutres orientés, les aiguilles, et plus particulièrement leurs encoches, sont disposées en fonction de l'orientation des filaments de manière à optimiser le taux de prise de filaments par les aiguilles. Dans le cas de préformes présentant des fibres continues avec une orientation principale, le feutre orienté est avantageusement appliqué sur la préforme de sorte que les filaments fassent un angle non nul avec les fibres continues d'orientation principale de la préforme, par exemple un angle de 90°.

Selon un mode de réalisation, le feutre présente une masse surfacique de 5 à 100 g/m², et/ou la préforme munie de filaments comprend de 1 à 10% en poids de filaments, de préférence de 2 à 5% en poids de filaments.

Une partie des filaments du feutre est transférée à travers la préforme, les filaments non transférés présents sur la première face principale peuvent être retirés par pelage du feutre ou non.

Selon un mode de réalisation, le reste de feutre est maintenu sur la préforme pour l'étape d'imprégnation, la structure non tissée des feutres augmente la perméabilité de la préforme et permet ainsi de favoriser l'infusion et/ou injection, les feutres conférant un effet drainant, plus particulièrement dans le cas d'une infusion. Les feutres peuvent en outre augmenter la tenue au choc de la préforme et/ou améliorer l'aspect de surface de la préforme.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels :
- la figure 1 est une vue schématique en coupe d'un exemple de pièce tridimensionnelle en matériau composite réalisée selon le procédé selon l'invention ;
- la figure 2 est une vue schématique de côté illustrant l'opération de drapage de la préforme sèche initiale ;
- la figure 3 est une vue schématique de côté illustrant l'opération d'application d'agent lubrifiant sur la préforme ;
- la figure 4 est une vue schématique de côté illustrant l'opération d'aiguilletage d'un feutre de fibres non tissé appliqué sur la préforme ;
- la figure 5A est une vue schématique d'une aiguille à barbe utilisable dans le dispositif d'aiguilletage, et la figure 5B est une vue agrandie partielle de la figure 4 ;
- la figure 6 est une vue analogue à celle de la figure 5 illustrant une aiguille à fourche utilisable dans le dispositif d'aiguilletage ;
- la figure 7 est une vue partielle schématique en coupe de la préforme après aiguilletage ;
- les figures 8 et 9 sont des vues en coupe de la presse illustrant l'opération de formage de la préforme obtenue après aiguilletage ;
- la figure 10 est une vue schématique en coupe du moule d'injection illustrant l'opération d'injection de la préforme obtenue après thermoformage ;
- la figure 11 est une vue schématique de côté d'un système de drapage et d'aiguilletage selon un premier mode de réalisation ;
- la figure 12 est une vue schématique de côté d'un système de drapage et d'aiguilletage selon un deuxième mode de réalisation, et la figure 13 est une vue agrandie partielle de la figure 12 ;
- la figure 14 est une vue schématique de côté d'un système de drapage et d'aiguilletage selon un troisième mode de réalisation ; et,
- les figures 15 et 16 sont respectivement une vue de dessus et une vue de côté d'un dispositif d'aiguilletage selon une variante de réalisation.

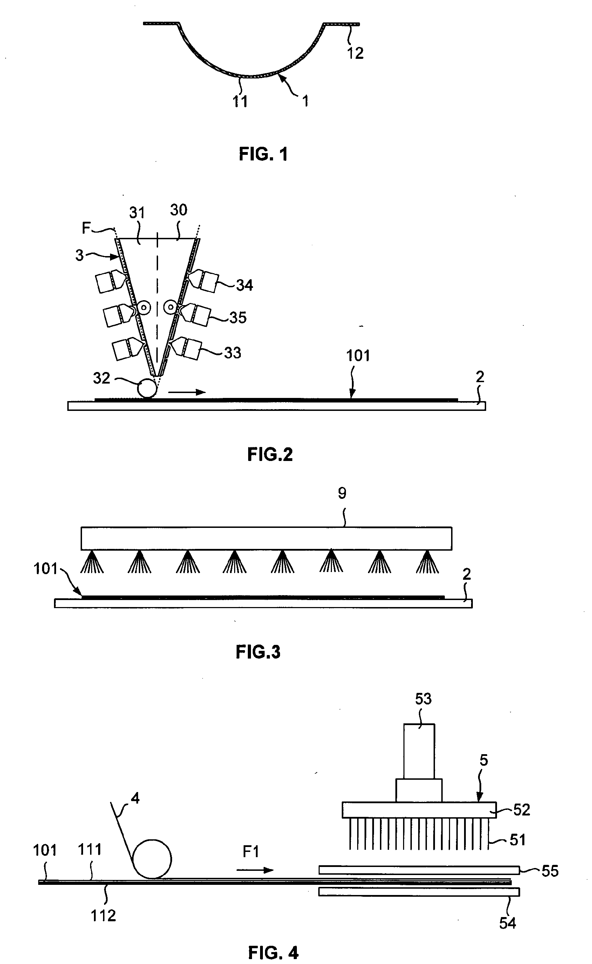

La Figure 1 illustre un exemple de pièce en matériau plastique tridimensionnelle 1 réalisable selon un procédé de l'invention, comprenant le drapage de fibres continues pour former une préforme sèche plane, l'application d'agent lubrifiant sur la préforme, l'application d'un feutre de fibres non tissé sur la préforme et l'aiguilletage dudit feutre, le formage de la préforme puis son imprégnation. La pièce présente ici la forme d'une calotte sphérique 11 avec un rebord annulaire 12.

Dans une première étape, tel qu'illustré à la figure 2, des plis de fibres unidirectionnelles continues sont drapés à plat sur un outillage de drapage 2 dans des différentes orientations, pour former une plaque ou une préforme sèche 101 initiale bidimensionnelle présentant deux faces principales opposées 111, 112.

Le drapage est effectué au moyen d'un dispositif de drapage 3 comprenant une tête 30 de placement de fibres, connue en soi, permettant le drapage automatique au contact de bandes formées d'une ou plusieurs fibres. Les fibres F entrent dans la tête 3 sous la forme de deux nappes de fibres, et la tête comprend un système de guidage 31 permettant de guider les fibres vers le rouleau de compactage 32 sous la forme d'une bande de fibres dans laquelle les fibres sont disposées côte à côte, par exemple sensiblement bord à bord. La tête comprend, de part et d'autre du système de guidage, des moyens de coupe 33 pour couper individuellement chaque fibre passant dans le système de guidage, des moyens de blocage 34 pour bloquer chaque fibre venant d'être coupée, et des moyens de réacheminement 35 pour entraîner individuellement chaque fibre, ceci afin de pouvoir à tout moment stopper et reprendre l'application d'une fibre, ainsi que choisir la largeur de la bande. Le drapage d'une bande est réalisé par déplacement relatif de la tête par rapport à la surface de drapage sensiblement plane de l'outillage de drapage. La tête comprend par exemple une structure support (non représentée) sur laquelle est monté le système de guidage et par laquelle la tête peut être assemblée à un système de déplacement, apte à déplacer la tête selon au moins deux directions perpendiculaires l'une à l'autre. La tête est par exemple prévue pour recevoir huit fibres, et permettre l'application de bandes de 1 à 8 fibres de 6,35 mm (1/4 de pouce) de large.

La tête est ici utilisée pour la réalisation d'une préforme sèche, à partir de fibres sèches munies d'un liant classiquement appelé « binder », pour conférer un caractère collant aux fibres lors du drapage et assurer la cohésion de la préforme. Le liant, constitué d'un polymère, peut être appliqué sur les fibres avant le drapage, par exemple sous la forme de voile et/ou de poudre, des bobines de fibres pré-munies de liant étant alors chargées dans la machine de placement de fibre. Le liant peut être appliqué en ligne, lors du drapage des fibres, par exemple directement sur les fibres à draper, par exemple sous forme de filaments, tel que décrit dans la demande de brevet français n°16 70088, déposée le 7 mars 2016 et ayant pour titre « Procédé de réalisation de préformes avec application de liant sur fibre sèche, et machine correspondante ».

Dans le cas notamment de fibres pré-munies de liant, la tête 3 est de préférence équipée d'un système de chauffage (non représenté), par exemple de type lampe IR ou laser, afin de chauffer le liant en cours d'application des fibres, et ainsi permettre au moins une adhésion des fibres des différents plis. Le système de chauffage chauffe les fibres avant leur application sur la surface d'application, ainsi que la surface d'application ou les fibres préalablement déposées, en amont du rouleau par rapport à la direction d'avancement de la tête.

Les fibres sont par exemple des fibres de carbone, plates continues, de type mèches, comprenant une multitude de fils ou filaments de carbone, avec un liant thermoplastique présent en quantité de l'ordre de 2% en poids.

Après réalisation de la préforme sèche 101, en référence à la figure 3, un agent lubrifiant, également appelé agent de lubrification, est ensuite appliqué sur la préforme sèche. Dans le présent mode de réalisation, l'agent lubrifiant comprend de l'eau et est appliqué par un système de pulvérisation 9 sur la préforme.

Après application de l'agent lubrifiant, un feutre 4 de filaments ou fibres 40 non tissé est appliqué sur une première face principale 111 de la préforme sèche, et la préforme ainsi munie du feutre est soumise à une opération d'aiguilletage, tel qu'illustré schématiquement à la figure 3, par passage dans un dispositif d'aiguilletage ou aiguilleteuse 5.

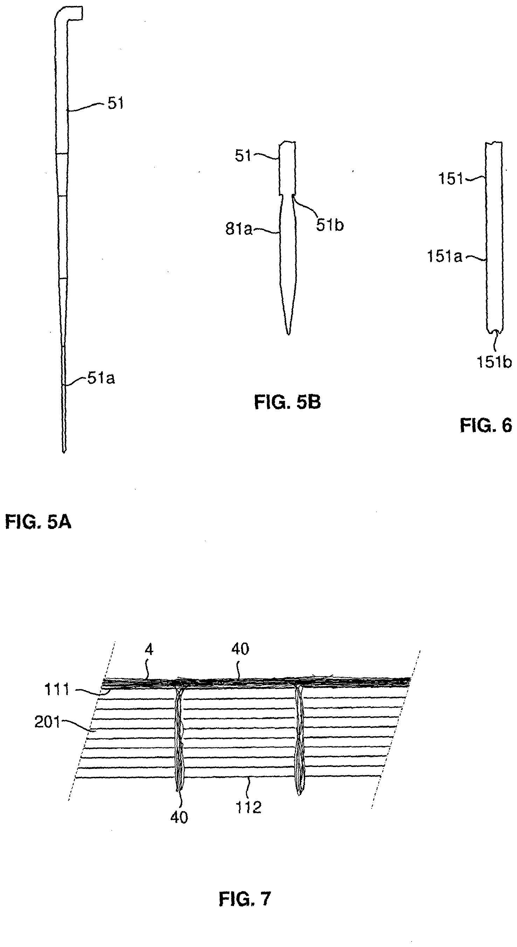

L'aiguilleteuse 5, connue en soi pour consolider des nappes de fibres, comprend une pluralité d'aiguilles 51 montées sur un support 52 ou planche à aiguilles, apte à être animé, par des moyens 53 appropriés, d'un mouvement de va-et-vient dans une direction parallèle aux aiguilles. L'aiguilleteuse comprend une table support 54 ajourée disposée en vis à vis des aiguilles et destinée à supporter la préforme, ainsi qu'un débourreur ou dévêtisseur 55 placé entre la table support et les aiguilles, muni de trous traversant pour le passage des aiguilles. La table support comprend également un ensemble de trous pour permettre le passage des aiguilles après qu'elles aient traversé la préforme. L'aiguilleteuse est par exemple équipée d'aiguilles 51 dites à barbes, tel qu'illustré aux figures 4 et 5, comprenant le long de sa portion distale ou portion travaillante 51a une ou plusieurs encoches 51b, orientées en direction de l'extrémité de l'aiguille, de sorte que l'aiguille entraine les filaments uniquement lors de la phase de pénétration, soit de haut en bas sur la figure 3. En variante, l'aiguilleteuse est équipée d'aiguilles 151 dites à fourche, tel qu'illustré à la figure 6, comprenant une ou plusieurs encoches 151b à l'extrémité de sa partie travaillante 151a.

Pendant l'aiguilletage, la préforme est entraînée positivement dans le sens de la flèche référencée F1, et les aiguilles sont entraînées en va et vient. Lors du déplacement des aiguilles vers le bas, des fibres du feutre se positionnent dans les encoches 51b des aiguilles et sont entraînées au travers de toute l'épaisseur de la préforme, les filaments ressortant sur la deuxième face principale 112, tel qu'illustré schématiquement à la figure 7. La densité d'aiguilletage est définie en fonction de la fréquence du mouvement en va-et-vient des aiguilles, le nombre d'aiguilles, et la vitesse d'avancement de la préforme dans l'aiguilleteuse.

Lors de l'aiguilletage, l'eau présente dans la préforme en tant qu'agent lubrifiant permet de réduire les frottements entre les aiguilles et ainsi de réduire l'échauffement de la préforme, ce qui garantit un transfert efficace des filaments du feutre à travers la préforme, limite la casse des fibres, et permet de piéger dans la préforme les éventuelles fibrilles résultant de la casse de fibres.

Après aiguilletage, le reste du feutre formé par les filaments présents sur la première face qui n'ont pas été aiguilletés, peut être maintenu sur la préforme ou être retiré. Selon un mode de réalisation, la densité d'aiguilletage et la profondeur de pénétration des aiguilles, qui est égale à la distance entre l'extrémité de l'aiguille et la deuxième face principale de la préforme, sont définies de sorte que la préforme présente une quantité de filaments, de préférence similaires, sur chacune de ses faces, ces filaments en surface augmentant la perméabilité de la préforme, et facilitent par ailleurs l'opération de formage.

Selon une variante de réalisation, les filaments ne sont pas appliqués sous la forme d'un feutre, mais projetés de manière aléatoire sur la première face de la préforme.

Après l'aiguilletage, la préforme est avantageusement soumise à une opération de séchage afin de réduire la teneur en eau de la préforme ou supprimer toute trace d'eau dans la préforme. Cette opération de séchage est par exemple réalisée en plaçant la préforme dans une étuve.

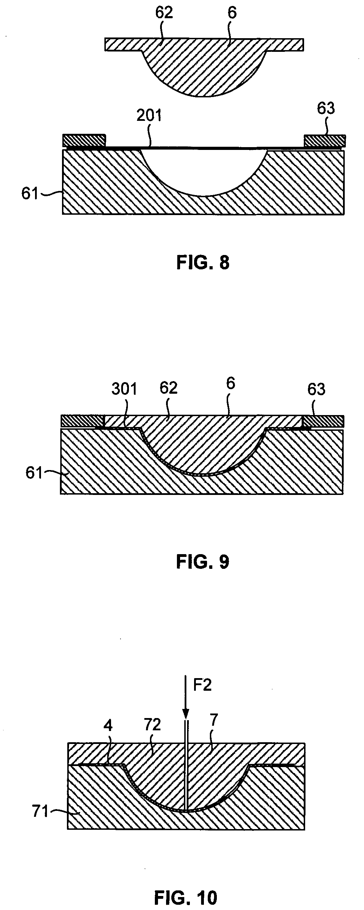

La préforme munie de filaments aiguilletés, appelée préforme renforcée 201, est ensuite transférée vers une presse pour l'opération de formage, également appelée opération d'emboutissage. Tel qu'illustré à la figure 8, la presse 6 comprend un outillage de formage femelle 61 ou matrice, présentant un renfoncement dont la forme correspond à celle de la calotte sphérique 12 de la préforme à réaliser, et un outillage de formage mâle 62, ou poinçon, comprenant un bossage de forme complémentaire. Le formage est réalisé par rapprochement relatif de l'outillage de formage mâle et de l'outillage de formage femelle, d'une position ouverte de la presse illustrée à la figure 4 vers une position fermée de la presse illustrée à la figure 5.

Le formage est réalisé à chaud, la préforme étant à une température de formage comprise entre la température de transition vitreuse et la température de fusion du polymère constituant le liant, et entre la température de transition vitreuse et la température de fusion du polymère formant les filaments du feutre. Cette température de formage de la préforme est obtenue par préchauffage de la préforme avant positionnement dans la presse et/ou par chauffage des deux outillages 61, 62. Ce préchauffage est par exemple réalisé par passage de la préforme initiale entre les rampes de lampe infrarouge supérieure et inférieure d'un four ou tunnel de préchauffage. De préférence, lors du formage, la préforme est maintenue sous tension par un système de mise sous tension, par exemple de type serre-flan, tel que représenté de manière schématique sous la référence 63. Les outillages 61, 62 sont ensuite écartés l'un de l'autre en position ouverte pour pouvoir démouler la préforme renforcée tridimensionnelle 301 de la presse.

La préforme renforcée tridimensionnelle 301 résultante est ensuite soumise à une opération d'ajout ou d'imprégnation d'un polymère d'imprégnation, thermodurcissable ou thermoplastique, par un procédé d'injection et/ou infusion. En référence à la figure 10, la préforme renforcée tridimensionnelle est par exemple placée dans un moule d'injection 7, entre la partie male et la partie femelle dudit moule, un polymère d'imprégnation est injecté sous pression dans la préforme, selon un procédé de type RTM (Resin Transfer Moulding), ou Gap-RTM, tel qu'illustré de manière schématique par la flèche référencée F2. La pièce composite 1 obtenue à l'issue de cette étape d'imprégnation peut être soumise à une opération de détourage.

A titre d'exemple, les pièces suivantes ont été réalisées.

### Exemple 1

- Drapage: Drapage d'une préforme par placement de fibres de carbone munies d'un liant appliqué en ligne, formé d'un copolyester thermoplastique ayant un point de fusion de l'ordre de 130°C, et une température de transition vitreuse d'environ 15°C, la préforme étant réalisée en drapant huit plis de fibres dans des orientations différentes, selon l'empilement suivant : +45°/-45°/0°/90°/90°/0°/-45°/+45°.
- Humidification : application d'eau sur la préforme, la préforme résultante comprenant 30% en poids d'eau.
- Application : Application d'un feutre non tissé en filaments ou fibres polyester de 14µm de diamètre, de 40 à 60 mm de longueur, et un point de fusion d'environ 200°C, ledit feutre, d'orientation isotrope, ayant une masse surfacique de 50 g/m².
- Aiguilletage avec des aiguilles à barbes, de jauge 40 (0,45 mm), présentant une partie travaillante de section triangulaire, avec deux encoches ou barbes par arête, avec une densité d'aiguilletage de 50 coups/cm². Le reste de feutre est maintenu sur la préforme.
- séchage : séchage de la préforme par passage en étuve au-dessus de 100°C.
- Formage : formage à une température de formage de 120°C
- Injection : injection de type gap-RTM d'un polymère époxy thermodurcissable en un cycle de trois minutes avec une première phase de compression et chauffage à 120°C d'environ 2 minutes, et une seconde phase d'injection et polymérisation à 50 bars, en tirant le vide, d'environ 1 minute.

### Exemple 2 : Les étapes de drapage, humidification, séchage, formage et injection sont identiques à celles de l'exemple 1.

- Application : Application d'un feutre non tissé en fibres polyacrylonitrile pré-oxydé de 30 µm de diamètre, de 40 à 60 mm de longueur, et un point de fusion supérieur à 200°C, ayant une masse surfacique de 60 g/m², les fibres ayant une orientation sensiblement isotrope.
- Aiguilletage avec des aiguilles à fourche, ayant une partie travaillante de jauge 42 (0,40mm), présentant une encoche ou fourche en extrémité, de 0,05mm de profondeur et 0,05mm de largeur, avec une densité d'aiguilletage de 200 coups/cm² et une profondeur de pénétration de 5 mm. Le reste de feutre est maintenu sur la préforme.

Les deux pièces résultantes ont été injectées uniformément, sans déplacement de fibres et sans zones sèches.

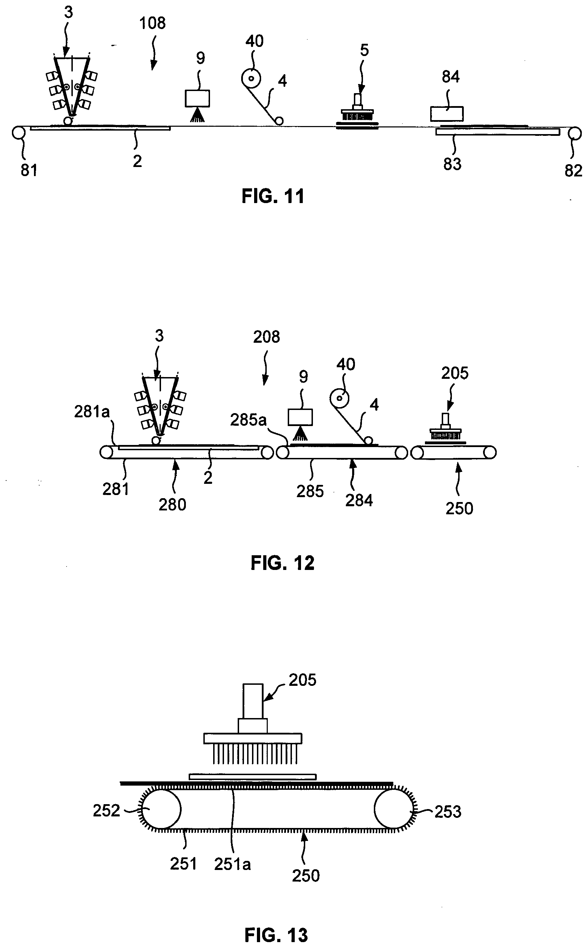

La figure 11 illustre un système 108 de drapage et d'aiguilletage selon l'invention dans lequel le transfert de la préforme du dispositif de drapage 3 vers l'aiguilleteuse 5, ainsi que l'avancée de la préforme lors de l'aiguilletage sont réalisés au moyen d'un film support 80. Un film support est déroulé depuis un rouleau amont 81 passe sur la plaque de drapage 2, entre la table support et le débourreur de l'aiguilleteuse, puis sur une plaque de découpe 83, et est ré-enroulé sur un rouleau aval 82. La préforme est dans un premier temps drapée sur le film support puis est transférée vers l'aiguilleteuse par enroulement du film sur le rouleau aval. Lors de ce transfert, de l'eau est appliquée sur la face supérieure de la préforme par un système de pulvérisation 9, le feutre 4 est déroulé automatiquement depuis une bobine 40 pour être appliqué sur la face supérieure de la préforme en aval du système de pulvérisation. Le feutre et ensuite aiguilleté, le film étant enroulé sur le rouleau aval pour faire avancer progressivement la préforme dans l'aiguilleteuse. La préforme renforcée est ensuite amenée sur la plaque de découpe 83, pour découper, par exemple par un système de découpe ultrason 84, le film autour de la préforme. Le film support peut ensuite être retiré de la préforme ou être maintenu sur celle-ci pour la phase ultérieure d'imprégnation, avec une éventuelle étape de formage intermédiaire. Le drapage s'effectue de préférence avec le film support à l'état stationnaire. La découpe du film d'une préforme peut par exemple être effectuée simultanément au drapage d'une nouvelle préforme.

Les figures 12 et 13 illustrent une variante de réalisation d'un système 208 de drapage et d'aiguilletage, dans lequel la préforme est drapée sur le brin supérieur d'un premier convoyeur à bande 280, transférée sur un deuxième convoyeur à bande 284 pour l'application de l'agent lubrifiant et du feutre, puis transférée sur la table support de l'aiguilleteuse 205 qui est ici formée par le brin supérieur d'un troisième convoyeur à bande 250, qui assure l'avancée de la préforme lors de l'aiguilletage. Le premier convoyeur 280 comprend une bande 281 sans fin montée entre un rouleau amont et un rouleau aval, dont au moins un des deux est motorisé. Le brin supérieur 281a de la bande repose sur la plaque de drapage 2 et la préforme est drapée sur ledit brin supérieur, de préférence lorsque la bande est à l'arrêt. Après drapage de la préforme, le convoyeur est activé pour transférer la préforme sur le brin supérieur 285a de la bande 285 du deuxième convoyeur 284, la bande étant montée entre un rouleau amont et un rouleau aval. Le feutre de filaments non tissé est appliqué sur la face supérieure de la préforme, au fur et à mesure de l'avancée de la préforme sur le deuxième convoyeur, et la préforme munie du feutre est transférée sur le brin supérieur du troisième convoyeur pour l'opération d'aiguilletage. La bande 251 de ce troisième convoyeur est montée également entre un rouleau amont 252 et un rouleau aval 253. Le troisième convoyeur est un convoyeur à brosse, dans lequel la bande présente une pluralité de poils sur lesquels repose la préforme, et dans lesquels les aiguilles pénètrent lors de l'aiguilletage, sur une profondeur de pénétration, définie par exemple entre 2 et 10 mm.

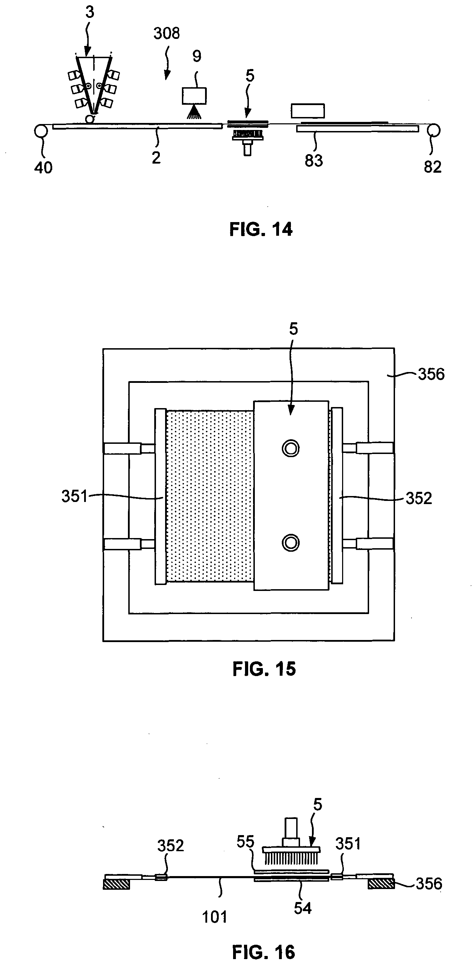

La figure 14 illustre un autre système 308 selon l'invention dans lequel la préforme est drapée sur le feutre de filaments non tissé, ledit feutre étant utilisé pour le transfert de la préforme du dispositif de drapage 3 vers l'aiguilleteuse 5, ainsi que pour l'avancée de la préforme lors de l'aiguilletage. Le feutre déroulé depuis une bobine 40 passe sur la plaque de drapage 2, entre la table support et le débourreur de l'aiguilleteuse, puis sur une plaque de découpe 83, et est ré-enroulé sur un rouleau aval 382. Par rapport au mode de réalisation précédent, l'aiguilleteuse est dans une position inversée, de sorte que la planche à aiguilles soit disposée du côté de la préforme munie du feutre. Le feutre est avantageusement un feutre orienté, ledit feutre étant disposé de sorte que les filaments d'orientation principale soient disposés selon la direction d'avancement du feutre afin que ledit feutre présente une bonne tenue mécanique assurant le support et le transfert de la préforme d'un poste à l'autre. Le dispositif de pulvérisation est disposé en amont de l'aiguilleteuse pour appliquer l'eau sur la préforme au fur et à mesure de son avancement.

Les figures 15 et 16 illustrent une variante de réalisation dans laquelle la préforme munie du feutre est montée sur un cadre 305 au moyen de pinces, l'opération d'aiguilletage étant réalisé par déplacement en translation du cadre par rapport à une aiguilleteuse 5 par des moyens appropriés. Lors de l'aiguilletage, la préforme est par exemple maintenue entre une pince amont 351 et une pince aval 352, et est positionnée entre le débourreur et la table support de l'aiguilleteuse.

## Revendications

1. Procédé de réalisation de pièces en matériau composite comprenant
- une étape de réalisation d'une préforme initiale (101), formée à partir de fibres continues, et
- une étape d'application de filaments (40) non tissés sur au moins une première face principale (111) de la préforme, et
- une étape d'aiguilletage desdits filaments au moyen d'un dispositif d'aiguilletage (5, 205, 305) comprenant une pluralité d'aiguilles (51, 151), chacune munie d'au moins une encoche (51b, 151b), de sorte que des filaments soient entraînés par les aiguilles et disposés dans une direction sensiblement perpendiculaire aux fibres continues de la préforme, **caractérisé en ce que** ladite préforme comprend lors de l'aiguilletage un agent lubrifiant pour réduire les frottements entre les aiguilles et les fibres de la préforme, l'agent lubrifiant comprenant de l'eau, la préforme comprenant au moins 2% en poids d'eau.

2. Procédé selon la revendication 1, **caractérisé en ce que** la préforme comprend au moins 5% en poids d'eau.

3. Procédé selon la revendication 2, **caractérisé en ce que** la préforme comprend de 10% à 40% en poids d'eau.

4. Procédé selon l'une des revendications 1 à 3, **caractérisé en ce que** l'agent de lubrification comprend de l'eau déminéralisée ou de l'eau distillée.

5. Procédé selon l'une des revendications 1 à 4, **caractérisé en ce que** l'agent lubrifiant est appliqué sur la préforme avant l'opération d'aiguilletage.

6. Procédé selon l'une des revendications 1 à 5, **caractérisé en ce que** l'agent lubrifiant est appliqué sur les filaments non tissés.

7. Procédé selon l'une des revendication 1 à 6, **caractérisé en ce qu'**il comprend une étape de séchage de la préforme après aiguilletage.

8. Procédé selon l'une des revendications 1 à 7, **caractérisé en ce qu'**il comprend la réalisation d'une préforme initiale comprenant plusieurs plis superposés, lesdits plis étant formés à partir de fibres continues munies d'un premier polymère.

9. Procédé selon la revendication 8, **caractérisé en ce qu'**il comprend la réalisation d'une préforme sèche initiale comprenant plusieurs plis superposés, lesdits plis étant formés à partir de fibres sèches continues munies d'un liant, ledit liant comprenant ledit premier polymère, ledit procédé comprenant, après l'étape d'aiguilletage, une étape d'imprégnation de la préforme sèche avec un polymère d'imprégnation.

10. Procédé selon l'une des revendications 1 à 9, **caractérisé en ce que** ladite étape d'application de filaments (40) comprend l'application d'un feutre (4) non tissé formé desdits filaments.

11. Procédé selon l'une des revendications 1 à 10, **caractérisé en ce que** la réalisation de la préforme comprend la réalisation de plis superposés, par application au contact, au moyen d'un rouleau d'application (32), de fibres continues sur un outillage de drapage (2), chaque pli étant réalisé par application d'une ou plusieurs bandes selon une orientation sur l'outillage de drapage ou sur des bandes du pli précédent, chaque bande étant formée d'une ou plusieurs fibres continues.

## Patentansprüche

1. Verfahren zur Herstellung von Teilen aus Verbundwerkstoff, umfassend
- einen Schritt zur Herstellung einer ursprünglichen Vorform (101), die aus fortlaufenden Fasern gebildet wird, und
- einen Schritt zum Anlegen von Vliesfilamenten (40) an mindestens eine erste Hauptseite (111) der Vorform, und
- eine Nadelungsschritt der Filamente anhand einer Nadelungsvorrichtung (5, 205, 305), die eine Vielzahl von Nadeln (51, 151) umfasst, die jeweils mit mindestens einer Einkerbung (51b, 151b) versehen sind, so dass die Filamente durch die Nadeln angetrieben werden, und in einer im Wesentlichen senkrechten Richtung zu den fortlaufenden Fasern der Vorform angeordnet sind,
**dadurch gekennzeichnet, dass** die Vorform beim Nadeln ein Schmiermittel umfasst, um die Reibungen zwischen den Nadeln und den Fasern der Vorform zu verringern, wobei das Schmiermittel Wasser umfasst, wobei die Vorform mindestens 2 Gew.-% an Wasser umfasst.

2. Verfahren nach Anspruch 1, **dadurch gekennzeichnet, dass** die Vorform mindestens 5 Gew.-% an Wasser umfasst.

3. Verfahren nach Anspruch 2, **dadurch gekennzeichnet, dass** die Vorform von 10 Gew.-% bis 40 Gew.-% an Wasser umfasst.

4. Verfahren nach einem der Ansprüche 1 bis 3, **dadurch gekennzeichnet, dass** das Schmiermittel entmineralisiertes Wasser oder destilliertes Wasser umfasst.

5. Verfahren nach einem der Ansprüche 1 bis 4, **dadurch gekennzeichnet, dass** das Schmiermittel an der Vorform vor dem Nadelungsvorgang angelegt wird.

6. Verfahren nach einem der Ansprüche 1 bis 5, **dadurch gekennzeichnet, dass** das Schmiermittel an den Vliesfilamenten angelegt wird.

7. Verfahren nach einem der Ansprüche 1 bis 6, **dadurch gekennzeichnet, dass** es einen Trocknungsschritt der Vorform nach der Nadelung umfasst.

8. Verfahren nach einem der Ansprüche 1 bis 7, **dadurch gekennzeichnet, dass** es die Herstellung einer ursprünglichen Vorform umfasst, die mehrere überlagerte Falten umfasst, wobei die Falten aus fortlaufenden Fasern gebildet werden, die mit einem ersten Polymer versehen sind.

9. Verfahren nach Anspruch 8, **dadurch gekennzeichnet, dass** es die Herstellung einer ursprünglichen trockenen Vorform umfasst, die mehrere überlagerte Falten umfasst, wobei die Falten aus fortlaufenden trockenen Fasern gebildet werden, die mit einem Bindemittel versehen sind, wobei das Bindemittel das erste Polymer umfasst, wobei das Verfahren nach dem Nadelungsschritt einen Imprägnierungsschritt der trockenen Vorform mit einem Imprägnierungspolymer umfasst.

10. Verfahren nach einem der Ansprüche 1 bis 9, **dadurch gekennzeichnet, dass** der Schritt des Anlegens von Filamenten (40) das Anlegen eines Nadelfilzes (4) umfasst, der aus den Filamenten gebildet wird.

11. Verfahren nach einem der Ansprüche 1 bis 10, **dadurch gekennzeichnet, dass** die Herstellung der Vorform die Herstellung von überlagerten Falten durch Anlegen in Kontakt anhand einer Anlegewalze (32) von fortlaufenden Fasern auf ein Drapierwerkzeug (2) umfasst, wobei jede Falte durch Anlegen eines oder mehrerer Bänder entlang einer Ausrichtung auf dem Drapierwerkzeug oder auf Bändern der vorherigen Falte hergestellt wird, wobei jedes Band aus einer oder mehreren fortlaufenden Fasern gebildet wird.

## Claims

1. Method for producing composite material parts comprising
- a step of producing an initial preform (101), formed from continuous fibres, and
- a step of applying non-woven filaments (40) to at least a first main face (111) of the preform, and
- a step of needling said filaments by means of a needling device (5, 205, 305) comprising a plurality of needles (51, 151), each provided with at least one notch (51b, 151b), such that filaments are drawn by the needles and arranged in a direction substantially perpendicular to the continuous fibres of the preform,
**characterized in that** said preform comprises during needling a lubricating agent for reducing friction between the needles and the fibres of the preform, the lubricating agent comprising water, the preform comprising at least 2% by weight of water.

2. Method according to claim 1, **characterized in that** the preform comprises at least 5% by weight of water.

3. Method according to claim 2, **characterized in that** the preform comprises from 10% to 40% by weight of water.

4. Method according to one of claims 1 to 3, **characterized in that** the lubricating agent comprises demineralized water or distilled water.

5. Method according to one of claims 1 to 4, **characterized in that** the lubricating agent is applied to the preform before the needling operation.

6. Method according to one of claims 1 to 5, **characterized in that** the lubricating agent is applied to the nonwoven filaments.

7. Method according to one of claims 1 to 6, **characterized in that** it comprises a step of drying the preform after needling.

8. Method according to one of claims 1 to 7, **characterized in that** it comprises producing an initial preform comprising a plurality of superimposed plies, said plies being formed from continuous fibres provided with a first polymer.

9. Method according to claim 8, **characterized in that** it comprises producing an initial dry preform comprising a plurality of superposed plies, said plies being formed from continuous dry fibres provided with a binder, said binder comprising said first polymer, said method comprising, after the needling step, a step of impregnating the dry preform with an impregnation polymer.

10. Method according to one of claims 1 to 9, **characterized in that** said step of applying filaments (40) comprises applying a non-woven felt (4) formed of said filaments.

11. Method according to one of claims 1 to 10, **characterized in that** the producing of the preform comprises the producing of superimposed plies, by contact application, by means of an application roller (32), of continuous fibres on a lay-up tool (2), each ply being produced by application of one or more tapes according to an orientation on the lay-up tool or on tapes of the preceding ply, each tape being formed of one or more continuous fibres.
